# EUROPÄISCHE PATENTSCHRIFT

(11) **EP 0 990 932 B1**
(45) Veröffentlichungstag und Bekanntmachung des Hinweises auf die Patenterteilung: **11.07.2007**
(21) Anmeldenummer: 99402192.1
(22) Anmeldetag: 06.09.1999
(51) Int. Cl.: G02B 6/44, H02G 1/08, G02B 6/50

(54) **Nachrichtenkabelnetz in einem primär für andere Zwecke genutzten Kanal-oder Rohrsystem**
Informationcablenetwork in a duct or tube system primarily used for other purposes
Réseau de cable de télécommunication dans un système de canalisation ou tube utilisé primairemement pour d' autres intentions

(30) Priorität: 01.10.1998 DE 19845172
(43) Veröffentlichungstag der Anmeldung: 05.04.2000
(73) Patentinhaber: Draka Comteq B.V., 1083 HJ Amsterdam (NL)
(72) Erfinder: Leise, Wolfgang Dr., 30989 Gehrden (DE); Weiss, Alexander Dr., 41066 Mönchengladbach (DE); Haag, Helmut Dipl.Phys., 52445 Tietz (DE); Menze, Bernd Dipl.Ing., 30161 Hannover (DE)
(74) Vertreter: Dohmen, Johannes Maria Gerardus

(56) Entgegenhaltungen:
- EP-A- 0 361 863
- DE-A- 3 309 996
- DE-A- 19 701 787
- DE-A- 19 801 500
- FR-A- 2 404 236
- PATENT ABSTRACTS OF JAPAN vol. 016, no. 300 (E-1227), 2. Juli 1992 (1992-07-02) & JP 04 079713 A (NKK CORP), 13. März 1992 (1992-03-13)
- PATENT ABSTRACTS OF JAPAN vol. 010, no. 183 (P-472), 26. Juni 1986 (1986-06-26) & JP 61 029811 A (KITA NIPPON DENSEN KK), 10. Februar 1986 (1986-02-10)

## Beschreibung

Die Erfindung betrifft ein Nachrichtenkabelnetz in einem primär für andere Zwecke genutzten Kanal- oder Rohrsystem nach dem Oberbegriff des Anspruchs 1.

Aus der DE 197 01 787 A ist es bekannt, Lichtwellenleiterkabel in begehbaren oder nicht begehbaren Wasser-, Abwasser- oder Regenwasserkanälen oder auch Gasrohranlagen zu verlegen. Hierdurch ist sichergestellt, daß die Lichtwellenleiterkabel ohne aufwendige Erdbauarbeiten auf einfache Weise bis in die einzelnen Gebäude verlegt werden können. Die Lichtwellenleiterkabel werden mit einem fernsteuerbaren Kanalroboters mittels sogenannter Briden an der Innenwandung der Kanäle bzw. Rohre befestigt. Das dort verwendete Lichtwellenleiterkabel weist ein äußeres Metallschutzröhrchen auf, in dem die Lichtwellenleiter enthalten sind. Eine Vielzahl derartiger Lichtwellenleiterkabel kann nebeneinander an den Wandungen befestigt sein. Die Lichtwellenleiterkabel können auch innerhalb von Kabelrohren verlaufen, d. h. die Kabelrohre werden zunächst an der Wandung befestigt und anschließend wird das Lichtwellenleiterkabel in das Kabelrohr eingezogen oder eingeblasen. Nachteilig ist hierbei, daß für die Verlegung des Lichtwellenleiterkabels zwei Arbeitgänge erforderlich sind, nämlich Verlegen des Kabelrohres und Einziehen des Lichtwellenleiterkabels. Die Lichtwallenleiterkabel weisen wie oben erwähnt ein äußeres Metallröhrchen mit guten Biegeeigenschaften, verbunden mit einer guten Stabilität, auf. Wegen der guten Biegeeigenschaften ist es erforderlich, die Briden in relativ kurzen Abständen von z. B. 1 - 2 m anzuordnen, um einen größeren Durchhang des Kabels zu vermeiden. Die guten Biegeeigenschaften müssen es möglich machen, daß das Kabel beim Austritt aus dem Rohr in den Schacht im Falle eines Abwasserrohres auf relativ kleinem Raum um 90° gebogen werden müssen, ohne daß das Metallröhrchen einknickt,

Der Erfindung liegt die Aufgabe zugrunde, ein Kabel für ein Nachrichtenkabelnetz der eingangs erwähnten Art bereitzustellen, welches einerseits biegesteif ist, jedoch auf übliche Kabeltransporttrommeln aufwickelbar ist, andererseits aber ohne großen Aufwand zu einem gut biegbaren Nachrichtenkabel umgewandelt werden kann.

Diese Aufgabe wird gelöst durch ein Nachrichtenkabelnetz nach dem Oberbegriff wobei die Seele als selbständiges voll funktionstüchiges Kabel ausgestaltet ist und der Mantel des Nachrichtenkabels im Bereich der Schächte von der Seele entfernt ist.

Der wesentliche Vorteil der Erfindung ist darin zu sehen, daß in einem Kabel zwei verschiedene Kabel vorhanden sind. Die Kabelseele wird dabei als selbständiges voll funktionstüchtiges Kabel ausgestaltet. Die Kombination Kabelseele und Mantel ist ein relativ steifes Gebilde, wogegen das Kabel ohne Mantel ein sehr gut biegbares Kabel ist. Das Kabel ohne Mantel kann im Erdreich, in Leerrohren im Erdreich oder in Kanälen direkt verlegt werden.

Weitere vorteilhafte Ausgestaltungen der Erfindung sind in den Unteransprüchen erfaßt.

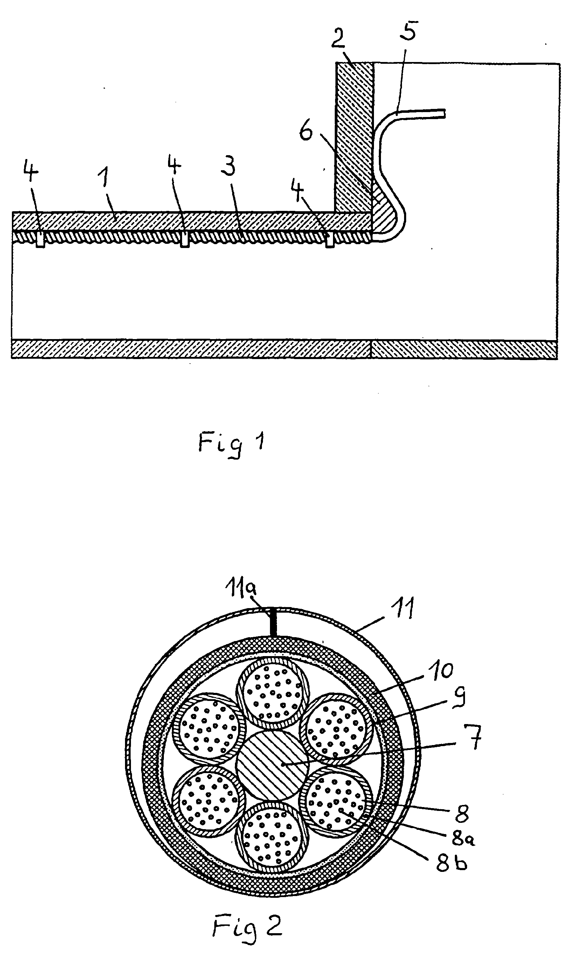

Die Erfindung ist anhand der in den Figuren 1 und 2 schematisch dargestellten Ausführungsbeispiele näher erläutert.

Figur 1 zeigt einen Teilausschnitt eines nicht begehbaren Kanalsystems, bestehend aus einem Abwasserrohr 1, welches in einem begehbaren Schacht 2 mündet. An der Wandung des Abwasserrohres 1 ist ein Nachrichtenkabel 3 durch Befestigungselemente 4 angebracht. Das Nachrichtenkabel 3 ist innerhalb des Abwasserohres 1 sehr biegesteif, so daß ein Durchhang des Nachrichtenkabels 3 zwischen zwei Befestigungselementen 4 praktisch nicht auftritt bzw. äußerst gering ist. Wegen der Steifigkeit des Nachrichtenkabels 3 kann der Abstand der Befestigungselemente 4 zueinander sehr groß, z. B. über 1 m, gewählt werden, wodurch hohe Verlegegeschwindigkeiten erreicht werden können. Das Nachrichtenkabel 3 wird, wie aus der DE 197 01 737 A bekannt, im Falle eines nicht begehbaren Abwasserrohres mittels eines Kanalroboters an die obengelegene Wandung des Kanals 1 geführt und durch die Befestigungselemente fixiert. An der Austrittsstelle des Kabels 3 aus dem Abwasserrohr 1 ist der biegesteife Mantel des Kabels entfernt und die Kabelseele 5 tritt in das Innere des Schachtes 2 ein. Die Kabelseele 5 ist als eigenes funktionstüchtiges Kabel ausgebildet und dabei wesentlich biegbarer als das Kabel 3.

Am Übergang zwischen Abwasserrohr 1 und Schacht 2 ist eine Biegehilfe 6 vorgesehen, die eine Biegung der Kabelseele 5 über deren Mindestbiegeradius verhindert.

Die Kabelseele 5 kann z. B. in einem Kabelkanal als Erdkabel oder einem Versorgungsrohr (Gas, Wasser etc.) in ein Gebäude geführt werden. Andererseits kann die Kabelseele 5 zu einer nicht dargestellten Muffe im Schacht 2 geführt werden.

In der Figur 2 ist ein Nachrichtenkabel dargestellt, welches aus einer Seele und einem Mantel besteht.

Die Seele weist ein Zentralelement 7 z. B. aus Polyaramid auf, um welches sechs Bündeladem 8 verseilt sind. Die Bündeladem 8 können um das Zentralelement 7 herumgeseilt oder durch SZ-Verseilung aufgebracht werden.

Jede Bündelader 8 besteht aus eine Aderhülle 8a, in welcher die Lichtwellenleiter 8b verlaufen. Die Bündeladem 8 können noch mit einem gelartigen Material gefüllt sein, welches eine Längswasserwanderung verhindern soll. Jede Bündelader 8 hat vierundzwanzig Lichtwellenleiter 8b.

Um die Bündeladem 8 ist ein Band 9 aus einem Quellvlies herumgelegt, welches bei Wasserzutritt aufquillt und die Kabelseele längswasserdicht macht. Das Band 9 ist vorzugsweise wendelartig aufgebracht.

Auf das Band 9 ist ein Zwischenmantel 10 aus abwasserbeständigem Polyethylen aufextrudiert.

Alternativ kann der Zwischenmantel 10 aus Polypropylen, Polyurethan, Polyvinylchlorid und ähnlichen Kunststoffen bestehen.

Der Zwischenmantel 10 kann auch mehrschichtig aufgebaut sein. So kann es für manche Anwendungsfälle vorteilhaft sein, wenn zunächst eine erste Schicht aus Polyethylen aufextrudiert wird, daß um die erste Schicht ein Geflecht oder ein Band aus Edelstahl herumgelegt und anschließend eine zweite Schicht aus Polyethylen aufextrudiert wird. Die zweite Schicht sollte dabei aus abwasserbeständigem Polyethylen bestehen.

Die aus den beschriebenen Elementen 7 - 10 aufgebaute Kabelseele ist ein voll funktionsfähiges Kabel, kann also im Erdreich verlegt, in Kabelkanalrohre eingezogen oder in Leitungsnetzen eingesetzt werden. Wesentlich für die Erfindung ist, daß die Kabelseele eine ausreichend gute Biegbarkeit aufweist.

Über der Kabelseele befindet sich ein Kabelmantel 11, der aus einem Metallrohr, vorzugsweise aus rostfreiem Stahl, besteht. Der Kabelmantel 11 wird, wie an sich bekannt, aus einem längseinlaufenden Metallband hergestellt, welches in kontinuierlicher Arbeitsweise zum Rohr geformt und an seinen Längskanten verschweißt wird (siehe Schweißnaht 11 a). Das Metallband umhüllt dabei die ebenfalls längseinlaufende Kabelseele.

Das Metallrohr wird nach dem Schweißen gewellt. Die Wellung kann bezüglich der Welltiefe und der Wellsteigung für den jeweiligen Anwendungsfall optimiert werden. Wesentlich ist jedoch, daß der Kabelmantel 11 so ausgestaltet ist, daß sich Kabelmantel 11 und Kabelseele (7 - 10) leicht voneinander trennen lassen und daß das Kabel einerseits eine Steifigkeit besitzt, die ein Aufwickeln auf eine Kabeltransporttrommel ermöglicht, andererseits aber gewährleistet ist, daß bei einer horizontalen Verlegung ein Durchhang von weniger als 20 mm bei einem Abstand zwischen zwei Befestigungspunkten von 2000 mm auftritt. Der Kabelmantel 11 weist wegen der Wellung eine hohe Querdruckfestigkeit auf. Gleichzeitig dient der Metallmantel 11 als Nagetierschutz.

In einem Beispiel, welches nicht Gegenstand der Erfindung ist, kann der Kabelmantel auch aus einem harten Kunststoff bestehen, wobei gewährleistet sein muß, daß sich der Kabelmantel leicht von der Kabelseele lösen läßt. In dem Kabelmantel sollten dann metallische Schichten untergebracht sein, z. B. ein Geflecht aus Edelstahldrähten oder ein Metallband. Diese metallischen Schichten sollen einerseits als Nagetierschutz dienen, andererseits dem Kabelmantel eine hohe Zugfestigkeit verleihen.

Der Zwischenraum zwischen äußerem Mantel 11 und der Kabelseele 7 - 10 kann zur Längswasserabdichtung mit Quellmaterial oder geschäumten Kunststoff gefüllt sein.

## Patentansprüche

1. Nachrichtenkabelnetz mit einem Nachrichtenkabel (3) in einem primär für andere Zwecke genutzten Kanal- oder Rohrsystem (1), wobei das Kanal-oder Rohrsystem (1) zumindest einen Schacht (2) umfasst, wobei die Nachrichtenkabel(3) an Wandungen des Kanal- oder Rohrsystems (1) durch Befestigungselemente (4) angebrachtes sind, wobei das Nachrichtenkabel(3) aus einer Seele (7-10) und einem Mantel (11) besteht, wobei der Mantel (11) ein längsnahtgeschweißtes Metallrohr is, wobei das Metallrohr (11) eine Wellung aufweist, wobei die Seele (7-10) des Nachrichtenkabels (3) eine ausreichend gute Biegbarkeit aufweist, nämlich einen Biegeradius von weniger als 200 mm und wobei der Mantel (11) eine derartige Steifigkeit aufweist, dass das Kabel bei einem Bestestigungsabstand von 2000 mm einen Durchhang von weniger als 20 mm aufweist, **dadurch gekennzeichnet, daß** die Seele (7-10) als selbständiges voll funktionstüchiges Kabel ausgestaltet ist und daß der Mantel (11) des Nachtrichtenkabels (3) im Bereich der Schächte (2) von der Seele (7-10) entfernt ist.

2. Nachrichtenkabelnetz nach Anspruch 1, wobei das Nachrichtenkabel (3) aus einem Verseilgebilde (7-8) aus Nachtrichtenadern (8) und einem über dem Verseilgebilde (7-8) angeordneten Zwischenmantel (10) besteht.

3. Nachrichtenkabelnetz nach einem der Ansprüche 1-2, wobei der Mantel (11) ein gewelltes Rohr aus Edelstahl ist.

4. Nachrichtenkabelnetz nach einem der Ansprüche 1-3, wobei der Zwischenmantel (10) aus einem Geflecht aus Metall- und/oder Kunststoffäden besteht.

5. Nachrichtenkabelnetz nach einem der Ansprüche 1-3, wobei der Zwischenmantel (10) ein extrudierter Kunststoffmantel ist.

6. Nachrichtenkabelnetz nach Anspruch 4, wobei über dem Geflecht ein extrudierter Kunststoffmantel angeordnet ist.

7. Nachrichtenkabelnetz nach einem der Ansprüche 1-6, wobei zwischen dem Verseilgebilde (7-8) und dem Zwischenmantel (10) ein Band (9) aus einem Quellvlies angeordnet ist.

8. Nachrichtenkabelnetz nach einem der Ansprüche 1-7, wobei das Nachrichtenkabel (3) ein Lichtwellenleiterkabel ist.

9. Nachrichtenkabeinetz nach einem der Ansprüche 1-8, wobei der Außendurchmesser des Nachrichtenkabels (3) höchstens 15 mm beträgt.

10. Verwendung eines Nachtrichtenkabels (3) welches aus einer Seele (7-10) und einem Mantel (11) besteht, wobei der Mantel (11) ein längsnahtgeschweißtes Metallrohr ist, wobei das Metallrohr (11) eine Wellung aufweist, wobei die Seele (7-10) des Nachrichtenkabels (3) eine ausreichend gute Biegbarkeit aufweist, nämlich einen Biegeradius von weniger als 200 mm und der Mantel (11) eine derartige Steifigkeit aufweist dass das Kabel bei einem Bestestigungsabstand von 2000 mm einen Durchhang von weniger als 20 mm aufweist, wobei das Nachtrichtenkabel (3) für ein Nachtrichtenkabelnet, in einem primär für andere Zwecke genutzten Kanal- oder Rohrsystem (1) ist, wobei das Nachrichtenkabel (3) an Wandungen des Kanal- oder Rohrsystems (1) durch Befestigungselemente (4) angebracht wird wobei das Kanal-oder Rohrsystem (1) zumindest einen Schacht (2) umfasst, **dadurch gekennzeichnet daß** die Seele (7-10) als selbständiges voll funktionstüchtiges Kabel ausgestaltet ist und daß der Mantel (11) des Nachtrichtenkabels (3) im Bereich der Schächte (2) von der Seele (7-10) entfernt wird.

11. Verwendung nach Anspruch 10, wobei die Seele (7-10) des Nachrichtenkabels (3) aus einem Verseilgebilde (7-8) aus Nachrichtenadern (8) und einem über dem verseilgebilde (7-8) angeordneten Zwischenmantel (10) besteht.

## Claims

1. Communications cable network having a communications cable (3) in a conduit system or pipe system (1) used primarily for other purposes, the conduit system or pipe system (1) including at least one shaft (2), the communications cables (3) being mounted on walls of the conduit system or pipe system (1) by means of fastening elements (4), the communications cable (3) consisting of a core (7-10) and a sheath (11), the sheath (11) being a longitudinally seam-welded metal tube, the metal tube (11) being corrugated, the core (7-10) of the communications cable (3) having sufficiently good ability to bend, namely a bending radius of less than 200 mm, and the sheath (11) having a rigidity such that the cable sag is less than 20 mm given a spacing between fastenings of 2000 mm, **characterised in that** the core (7-10) is in the form of an independent, fully functional cable and **in that** in the region of the shafts (2) the sheath (11) of the communications cable (3) has been removed from the core (7-10).

2. Communications cable network according to claim 1, wherein the communications cable (3) consists of a stranded arrangement (7-8) of communications lines (8) and, arranged over the stranded arrangement (7-8), an intermediate sheath (10).

3. Communications cable network according to one of claims 1-2, wherein the sheath (11) is a corrugated tube of high-grade steel.

4. Communications cable network according to one of claims 1-3, wherein the intermediate sheath (10) consists of a braided arrangement of metal and/or plastics threads.

5. Communications cable network according to one of claims 1-3, wherein the intermediate sheath (10) is an extruded plastics sheath.

6. Communications cable network according to claim 4, wherein an extruded plastics sheath is arranged over the braided arrangement.

7. Communications cable network according to one of claims 1-6, wherein a tape (9) of a non-woven material capable of swelling is arranged between the stranded arrangement (7-8) and the intermediate sheath (10).

8. Communications cable network according to one of claims 1-7, wherein the communications cable (3) is a light-waveguide cable.

9. Communications cable network according to one of claims 1-8, wherein the external diameter of the communications cable (3) is at most 15 mm.

10. Use of a communications cable (3) which consists of a core (7-10) and a sheath (11), the sheath (11) being a longitudinally seam-welded metal tube, the metal tube (11) being corrugated, the core (7-10) of the communications cable (3) having sufficiently good ability to bend, namely a bending radius of less than 200 mm, and the sheath (11) having a rigidity such that the cable sag is less than 20 mm given a spacing between fastenings of 2000 mm, the communications cable (3) being for a communications cable network in a conduit system or pipe system (1) used primarily for other purposes, the communications cable (3) being mounted on walls of the conduit system or pipe system (1) by means of fastening elements (4), the conduit system or pipe system (1) including at least one shaft (2), **characterised in that** the core (7-10) is in the form of an independent, fully functional cable and **in that** in the region of the shafts (2) the sheath (11) of the communications cable (3) has been removed from the core (7-10).

11. Use according to claim 10, wherein the core (7-10) of the communications cable (3) consists of a stranded arrangement (7-8) of communications lines (8) and, arranged over the stranded arrangement (7-8), an intermediate sheath (10).

## Revendications

1. Réseau de câble de télécommunication avec un câble de télécommunication (3) dans un système de canal ou de tube (1) utilisé en premier lieu à d'autres fins, le système de canal ou de tube (1) comportant au moins un regard (2), les câbles de télécommunication (3) étant fixés sur des parois du système de canal ou de tube (1) par des éléments de fixation (4), le câble de télécommunication (3) étant constitué d'une âme (7 - 10) et d'une gaine (11), la gaine (11) étant un tube métallique à cordon de soudure longitudinal, le tube métallique (11) comportant une ondulation, l'âme (7 - 10) du câble de télécommunication (3) ayant une flexibilité suffisamment bonne, à savoir un rayon de courbure inférieur à 200 mm, et la gaine (11) ayant une rigidité telle que, à un écartement de fixation de 2 000 mm, le câble ait une flèche inférieure à 20 mm, **caractérisé par le fait que** l'âme (7 - 10) est agencée sous la forme d'un câble indépendant pleinement fonctionnel, et en ce que l'âme (7 - 10) est dénudée de la gaine (11) du câble de télécommunication (3) dans la zone des regards (2).

2. Réseau de câble de télécommunication selon la revendication 1, dans lequel le câble de télécommunication (3) est constitué d'une configuration câblée (7 - 8) de conducteurs de télécommunication (8), et d'une gaine intermédiaire (10) disposée par dessus la configuration câblée (7 - 8).

3. Réseau de câble de télécommunication selon l'une des revendications 1 à 2, dans lequel la gaine (11) est un tube ondulé en acier spécial.

4. Réseau de câble de télécommunication selon l'une des revendications 1 à 3, dans lequel la gaine intermédiaire (10) est constituée d'une tresse de fils métalliques et/ou plastiques.

5. Réseau de câble de télécommunication selon l'une des revendications 1 à 3, dans lequel la gaine intermédiaire (10) est une gaine en matière plastique extrudée.

6. Réseau de câble de télécommunication selon la revendication 4, dans lequel une gaine en matière plastique extrudée est disposée par dessus la tresse.

7. Réseau de câble de télécommunication selon l'une des revendications 1 à 6, dans lequel une bande (9) en un non-tissé gonflant est disposée entre la configuration câblée (7 - 8) et la gaine intermédiaire (10).

8. Réseau de câble de télécommunication selon l'une des revendications 1 à 7, dans lequel le câble de télécommunication (3) est un câble à fibres optiques.

9. Réseau de câble de télécommunication selon l'une des revendications 1 à 8, dans lequel le diamètre extérieur du câble de télécommunication (3) est au maximum de 15 mm.

10. Utilisation d'un câble de télécommunication (3) constitué d'une âme (7 - 10) et d'une gaine (11), la gaine (11) étant un tube métallique à cordon de soudure longitudinal, le tube métallique (11) comportant une ondulation, l'âme (7 - 10) du câble de télécommunication (3) ayant une flexibilité suffisamment bonne, à savoir un rayon de courbure inférieur à 200 mm, et la gaine (11) ayant une rigidité telle que, à un écartement de fixation de 2000 mm, le câble ait une flèche inférieure à 20 mm, le câble de télécommunication (3) pour un réseau de câbles de télécommunication étant disposé dans un système de canal ou de tube (1) utilisé en premier lieu à d'autres fins, le câble de télécommunication (3) étant fixé sur des parois du système de canal ou de tube (1) par des éléments de fixation (4), et le système de canal ou de tube (1) comportant au moins un regard (2), **caractérisée par le fait que** l'âme (7 - 10) est agencée sous la forme d'un câble indépendant pleinement fonctionnel, et en ce que l'âme (7 - 10) est dénudée de la gaine (11) du câble de télécommunication (3) dans la zone des regards (2).

11. Utilisation selon la revendication 10, étant précisé que l'âme (7 - 10) du câble de télécommunication (3) est constituée d'une configuration câblée (7 - 8) de conducteurs de télécommunication (8), et d'une gaine intermédiaire (10) disposée par dessus la configuration câblée (7 - 8).
